## Europäisches Patentamt

## European Patent Office

## Office européen des brevets

(19)

(11) Veröffentlichungsnummer: **0 279 067**
**B1**

(12)

# EUROPÄISCHE PATENTSCHRIFT

(45) Veröffentlichungstag der Patentschrift:
**04.07.90**

(21) Anmeldenummer: **87118999.9**

(22) Anmeldetag: **22.12.87**

(51) Int. Cl.⁵: **C08F 220/12**, C09D 133/04,
C09D 133/26
// (C08F220/12, 220:06, 220:56,
246:00)

(54) **Wässrige Polymerdispersionen für die Holzbeschichtung.**

(30) Priorität: **10.01.87 DE 3700534**

(43) Veröffentlichungstag der Anmeldung:
**24.08.88 Patentblatt 88/34**

(45) Bekanntmachung des Hinweises auf die Patenterteilung:
**04.07.90 Patentblatt 90/27**

(84) Benannte Vertragsstaaten:
**AT BE CH DE ES FR GB IT LI LU NL SE**

(56) Entgegenhaltungen:
**EP-A- 0 026 907**
**EP-A- 0 170 400**
**US-A- 3 389 110**

(73) Patentinhaber: **BASF Aktiengesellschaft,
Carl-Bosch-Strasse 38, D-6700 Ludwigshafen(DE)**

(72) Erfinder: **Dersch, Rolf, Dr., Albrecht-Dürer-Ring 16,
D-6710 Frankenthal(DE)**
Erfinder: **Dehne, Heinrich, Saarlandstrasse 40,
D-6700 Ludwigshafen(DE)**
Erfinder: **Gellert, Roland, Dr., Wittelsbacher Strasse 39,
D-6730 Neustadt(DE)**
Erfinder: **Müller, Dietrich-Wolfgang, Dr., Hasenhain 11,
D-6901 Dossenheim(DE)**
Erfinder: **Vinke, Johannes, Dr.,
Heinrich-von-Kleist-Strasse 9, D-6832 Hockenheim(DE)**
Erfinder: **Wistuba, Eckehardt, Dr., Im Obergarten 7,
D-6702 Bad Dürkheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 279 067 B1

## Beschreibung

Die vorliegende Erfindung betrifft wäßrige Polymerdispersionen, enthaltend im wesentlichen ein Copolymerisat aus

a) 85 bis 98,5 Gew.% Methacrylsäureester
b) 0,5 bis 4 Gew.% Acrylsäure und/oder Methacrylsäure
c) 0,5 bis 4 Gew.% Acrylsäureamid und/oder Methacrylsäureamid und
d) 0,5 bis 4 Gew.% einer mindestens zweifach $\alpha,\beta$-ethylenisch ungesättigten Verbindung und
e) 0 bis 3 Gew.% einer carbonylgruppenhaltigen $\alpha,\beta$-ethylenisch ungesättigten Verbindung

sowie ein Verfahren zu deren Herstellung und deren Verwendung für die Holzbeschichtung.

Holzoberflächen, wie von Paneelen, Möbeln und Türen werden aus Gründen des Schutzes und der Ästhetik häufig mit transparenten Lacken beschichtet. Verwendung finden bisher Nitrolacke, säurehärtende Alkyd-Amino-Lacke, Lacke auf Basis von ungesättigten Polyestern und Polyurethanlacke. Die genannten klassischen Lacke sind aufgrund der darin enthaltenen und während der Verarbeitung und Trocknung in die Atmosphäre gelangenden Lösemittel aus Gründen der Arbeitshygiene und des Umweltschutzes bedenklich.

In der DE-OS 25 35 660 wird ein Verfahren zur Herstellung vernetzbarer Polymerisate und Copolymerisate mit methylolierten Carbonsäureamidgruppen beschrieben. Aus der EP-PS 29 144 ist die Verwendung von N-Methylol(meth)acrylamid enthaltenden wäßrigen Polymerdispersionen für Lackierungen von Holzoberflächen bekannt. Die Methylolgruppen können bei Temperaturen über 100°C miteinander reagieren, d.h. der Lack kann vernetzen und somit in seiner Widerstandsfähigkeit gegen chemische Einflüsse verbessert werden. Nachteilig ist jedoch, daß die zur Reaktion der Methylolgruppen nötige Temperatur für Holz als Substrat häufig zu hoch ist und daß bei dieser Vernetzungsreaktion Formaldehyd abgespalten wird.

Weiterhin führen diese Beschichtungen zu Oberflächen, die in Bezug auf Kratzfestigkeit, Härte, Elastizität, Schleifbarkeit, Stapelfestigkeit und Widerstandsfähigkeit gegen chemische Einwirkungen, z.B. Getränken und Reinigungsmitteln, den Anforderungen der Praxis nicht voll entsprechen.

Aufgabe der vorliegenden Erfindung war daher die Bereitstellung von Polymerdispersionen für die Herstellung von wäßrigen Holzlacken, die die oben genannten Nachteile nicht aufweisen.

Demgemäß wurden wäßrige Polymerdispersionen gefunden, enthaltend im wesentlichen ein Copolymerisat aus

a) 85 bis 98,5 Gew.% Methacrylsäureester
b) 0,5 bis 4 Gew.% Acrylsäure und/oder Methacrylsäure
c) 0,5 bis 4 Gew.% Acrylsäureamid und/oder Methacrylsäureamid
d) 0,5 bis 4 Gew.% einer mindestens zweifach $\alpha,\beta$-ethylenisch ungesättigten Verbindung und
e) 0 bis 3 Gew.% einer carbonylgruppenhaltigen $\alpha,\beta$-ethylenisch ungesättigten Verbindung.

Weiterhin wurde ein Vefahren zur Herstellung von wäßrigen Polymerdispersionen gefunden, wobei man

a) 85 bis 98,5 Gew.-% Methacrylsäureester
b) 0,5 bis 4 Gew.-% Acrylsäure und/oder Methacrylsäure
c) 0,5 bis 4 Gew.-% Acrylsäureamid und/oder Methacrylsäureamid
d) 0,5 bis 4 Gew.-% einer mindestens zweifach $\alpha,\beta$-ethylenisch ungesättigten Verbindung und
e) 0 bis 3 Gew.-% einer carbonylgruppenhaltigen $\alpha,\beta$-ethylenisch ungesättigten Verbindung

In wäßriger Phase in Gegenwart von Emulgatoren und Initiatoren bei Temperaturen von 60 bis 95°C dispergiert und polymerisiert.

Als Komponente a) eignen sich besonders Methacrylsäureester von $C_1$- bis $C_{12}$-Monoalkoholen, bevorzugt $C_1$- bis $C_8$-Monoalkohole, wie Methanol, Ethanol, n-Propanol, iso-Propanol, n-Butanol, iso-Butanol, tert.-Butanol, Cyclohexanol, 2-Ethylhexanol und Laurylalkohol. Besonders bevorzugt ist das n-Butylmethacrylat oder ein Gemisch aus n-Butylmethacrylat mit bis zu 25 Gew.% Methylmethacrylat. Die Methacrylsäureester werden in Mengen von 85 bis 98,5 Gew.%, bevorzugt 90 bis 97 Gew.% verwendet.

Die Komponenten c) und d) werden jeweils in Mengen von 0,5 bis 4 Gew.%, bevorzugt 0,5 bis 2,5 Gew.%, verwendet.

Als Komponente d) werden mindestens zweifach $\alpha,\beta$-ethylenisch ungesättigte Verbindungen in Mengen von 0,5 bis 4 Gew.%, bevorzugt 0,5 bis 2,5 Gew.%, eingesetzt. Geeignete Verbindungen sind beispielsweise Divinylaromaten, wie Divinylbenzol, Diacrylsäureester und Dimethacrylsäureester von $C_2$- bis $C_{24}$-Diolen, wie Butandioldiacrylat, Butandioldimethacrylat und Hexandioldiacrylat, Divinylharnstoffe, wie Divinylethylenharnstoff sowie Di- und Triallylverbindungen, wie Diallylphthalat und Triallylisocyanurat. Bevorzugt werden Divinylbenzol, Butandioldiacrylat und Butandioldimethacrylat eingesetzt.

Carbonylgruppenhaltige α,β-ethylenisch ungesättigte Verbindungen e) können mitverwendet werden. Im Falle ihrer Mitverwendung sind 1 bis 3 Gew.% bevorzugt. Geeignete Verbindungen sind beispielsweise Acrolein, Methacrolein, Diacetonacrylamid, Diacetonmethacrylamid, 2-Butanonmethacrylsäureester und Acetessigsäurevinylester.

Der Dispersion können pro mol carbonylgruppenhaltigem Monomer als Vernetzer 0,5 bis 1 mol Dihydrazid einer aliphatischen Dicarbonsäure, bevorzugt einer $C_4$- bis $C_{16}$-Dicarbonsäure, zugesetzt werden. Geeignete Dihydrazide sind beispielsweise Adipinsäuredihydrazid, Glutarsäuredihydrazid und Bernsteinsäuredihydrazid.

Die erfindungsgemäßen Polymerdispersionen können nach üblichen Emulsionspolymerisationsverfahren unter Verwendung von Initiatoren wie Wasserstoffperoxid, Natriumpersulfat, Kaliumpersulfat, organischen Peroxiden oder von üblichen Redox-Initiatorsystemen, Reglern wie Mercaptanen, Emulgatoren-Schutzkolloiden wie $C_{12}$- bis $C_{18}$-Paraffinsulfonsäure-Na-Salz oder Salzen von sauren Schwefelsäurehalbestern von Ethylenoxid(Propylenoxid)-Addukten und anderen üblichen Hilfsstoffen hergestellt werden, so daß sich weitere Ausführungen erübrigen.

Die erfindungsgemäßen Dispersionen haben üblicherweise Feststoffgehalte von 20 bis 60 Gew.%, bevorzugt 40 bis 50 Gew.%, und weisen LD-Werte (Lichtdurchlässigkeit) von 70 % bis 98 %, bevorzugt 90 % bis 96 %, auf.

Auf Basis der erfindungsgemäßen Polymerdispersionen hergestellte Holzlacke können übliche Zusatzstoffe wie Wachse auf Basis von Paraffin und Polyethylen enthalten. Die Wachse werden üblicherweise als 20 bis 60 gew.%ige Dispersionen während oder nach der Emulsionspolymerisation zugegeben. Es werden Wachse mit Erweichungspunkten um 50 bis 250°C, bevorzugt 70 bis 130°C, verwendet. Die Teilchengröße der Wachsteilchen kann 0,01 bis 0,5 µm betragen.

Zur besseren Filmbildung können Filmbildehilfsmittel wie Butylglykol, Diisobutylestergemische der Adipin-, Glutar- und/oder Bernsteinsäure sowie andere Lösemittel in Mengen von 3 bis 8 Gew.% zugesetzt werden.

Weiterhin können Mattierungsmittel wie Siliciumdioxidverbindungen in Mengen von 0,5 bis 2 Gew.-% sowie Verdicker auf Basis von Polyurethan und/oder Polyacrylaten mitverwendet werden.

Die mit Hilfe der erfindungsgemäßen Dispersionen hergestellten Holzlacke können durch Streichen, Spritzen und Gießen verarbeitet werden.

Die Trocknung erfolgt bei Raumtemperatur, kann aber auch bei erhöhten Temperaturen bis 80°C in üblichen Trocknungskanälen erfolgen.

Die so erhaltenen Beschichtungen sind gut schleifbar und stapelfest und weisen eine hohe Widerstandsfähigkeit gegen chemische Einwirkungen auf.

Beispiele

Herstellung der Polymerdispersionen

In einem Reaktionsgefäß mit 4 Zulaufgefäßen wurde die jeweils in den Beispielen 1 bis 4 aufgeführten Vorlagen unter Rühren auf 85°C aufgeheizt. Je 5 Gew.% der Zuläufe 1 und 2 wurden zugegeben und 15 Minuten anpolymerisiert. Die restliche Menge von Zulauf 1 wurde danach innerhalb von 2,5 Stunden und die restliche Menge von Zulauf 2 in 2,75 Stunden zugegeben. Nach beendetem Zulauf 1 wurde noch 1,75 Stunden nachpolymerisiert. Anschließend wurde auf 20°C gekühlt. Mit 25 gew.%iger wäßriger Ammoniaklösung wurde pH 8 eingestellt. In den Beispielen 1 und 2 wurde dann der jeweils dort aufgeführte Zulauf 3 innerhalb von 5 Minuten zugetropft und 55 Minuten nachgerührt. Die in den Beispielen 1 bis 4 beschriebenen Zuläufe 4 wurden schließlich jeweils innerhalb von 15 Minuten unter Rühren zugefahren. Die Kennzahlen der Polymerdispersionen sind bei den jeweiligen Beispielen aufgeführt.

EP 0 279 067 B1

| Beispiel 1 | | |
|---|---|---|
| Vorlage | 550 g | Wasser |
| | 33,7 g | $C_{12}$–$C_{14}$-Fettalkoholethersulfat-Na-Salz (Ethylenoxidgehalt: 2,5 Gew.-%) 28 gew.-%ig |
| Zulauf 1 | 510 g | Wasser |
| | 33,7 g | $C_{12}$–$C_{14}$-Fettalkoholethersulfat-Na-Salz (Ethylenoxidgehalt: 2,5 Gew.-%) 28 gew.-%ig |
| | 14,2 g | Acrylsäure |
| | 14,2 g | Methacrylsäure |
| | 14,2 g | 1,4-Butandiodiacrylat |
| | 18,9 g | Acrylamid 50 gew.-%ig in Wasser |
| | 18,9 g | Diacetonacrylamid |
| | 802,4 g | n-Butylmethacrylat |
| | 141,6 g | Methylmethacrylat |
| Zulauf 2 | 170 g | Wasser |
| | 4,7 g | Natriumperoxidisulfat |
| Zulauf 3 | 13,9 g | Adipinsäuredihydrazid |
| Zulauf 4 | 90 g | Polyethylenwachsemulsion 35 gew.-%ig (Tropfpunkt des Festkörpers 130°C) |
| Kennzahlen | | |
| Feststoffgehalt (Gew.-%) | | 43,8 |
| Viskosität DIN 4-Becher 23°C (s) | | 32 |
| LD-Wert (%) (0,01 gew.-%ige Dispersionslösung) | | 96 |

| Beispiel 2 | | | |
|---|---|---|---|
| Vorlage | | 550 g | Wasser |
| | | 29 g | Natriumlaurylsulfat 15 gew.-%ig |
| | | 24,2 g | ethoxiliertes $C_8$-Alkylphenol (Ethylenoxidgehalt: 2,5 Gew.-%) 20 gew.-%ig |
| Zulauf 1 | | 370 g | Wasser |
| | | 67,7 g | Natriumlaurylsulfat 15 gew.-%ig |
| | | 14,6 g | Acrylsäure |
| | | 14,2 g | Methacrylsäure |
| | | 10,9 g | Divinylbenzol |
| | | 19,4 g | Acrylamid 50 gew.-%ig in Wasser |
| | | 19,4 g | Diacetonacrylamid |
| | | 967 g | n-Butylmethacrylat |
| Zulauf 2 | | 170 g | Wasser |
| | | 4,3 g | Natriumpersulfat |
| Zulauf 3 | | 13,9 g | Adipinsäuredihydrazid |
| Zulauf 4 | | 90 g | Polyethylenwachsemulsion 35 gew.-%ig (Tropfpunkt des Festkörpers 130°C) |
| Kennzahlen | | | |
| Feststoffgehalt (Gew.-%) | | 46,6 | |
| Viskosität DIN 4-Becher 23°C (s) | | 38 | |
| LD-Wert (%) (0,01 gew.-%ige Dispersionslösung) | | 94 | |

Beispiel 3 (Vergleichsversuch)

| Vorlage | 550 g | Wasser |
| --- | --- | --- |
| | 33,7 g | C$_{12}$–C$_{14}$-Fettalkoholethersulfat-Na-Salz (Ethylenoxidgehalt: 2,5 Gew.-%) 28 gew.-%ig |
| Zulauf 1 | 340 g | Wasser |
| | 33,7 g | C$_{12}$–C$_{14}$-Fettalkoholethersulfat-Na-Salz (Ethylenoxidgehalt: 2,5 Gew.-%) 28 gew.-%ig |
| | 7,1 g | Acrylsäure |
| | 14,2 g | Methacrylsäure |
| | 18,9 g | 1,4-Butandiodiacrylat |
| | 243 g | Methylmethacrylat |
| | 708 g | n-Butylmethacrylat |
| Zulauf 2 | 160 g | Wasser |
| | 4,7 g | Natriumpersulfat |
| Zulauf 3 | – | |
| Zulauf 4 | 90 g | Polyethylenwachsemulsion 35 gew.-%ig (Tropfpunkt des Festkörpers 130°C) |
| Kennzahlen | | |
| Feststoffgehalt (Gew.-%) | 46,7 | |
| Viskosität DIN 4-Becher 23°C (s) | 28 | |
| LD-Wert (%) (0,01 gew.-%ige Dispersionslösung) | 95 | |

Beispiel 4

| Vorlage | 550 g | Wasser |
|---|---|---|
| | 33,7 g | C$_{12}$–C$_{14}$-Fettalkoholethersulfat-Na-Salz (Ethylenoxidgehalt: 2,5 Gew.-%) 28 gew.-%ig |
| Zulauf 1 | 340 g | Wasser |
| | 33,7 g | C$_{12}$–C$_{14}$-Fettalkoholethersulfat-Na-Salz (Ethylenoxidgehalt: 2,5 Gew.-%) 28 gew.-%ig |
| | 14,2 g | Acrylsäure |
| | 14,2 g | Methacrylsäure |
| | 18,9 g | Acrylamid 50 gew.-% in Wasser |
| | 188,8 g | Methylmethacrylat |
| | 755,2 g | n-Butylmethacrylat |
| Zulauf 2 | 160 g | Wasser |
| | 4,7 g | Natriumpersulfat |
| Zulauf 3 | — | |
| Zulauf 4 | 90 g | Polyethylenwachsemulsion 35 gew.-%ig (Tropfpunkt des Festkörpers 130°C) |
| Kennzahlen | | |
| Feststoffgehalt (Gew.-%) | 45,0 | |
| Viskosität DIN 4-Becher 23°C (s) | 25 | |
| LD-Wert (%) (0,01 gew.-%ige Dispersionslösung) | 91 | |

Beispiel 5

Herstellung eines Holzlackes

20 g Xylol
10 g 3,3,5-Trimethylpentan-1,3-diol-isobutyrat
3 g Na-Salz eines sulfierten Ölsäuredibutylamids (etwa 40 gew.%ig in Wasser)
4 g Entschäumer auf Mineralölbasis
21 g Wasser
25 g Polyurethanverdicker 55 gew.%ig in Butyldiglykol/Wasser (Umsetzungsprodukt eines ethoxylierten Talkfettalkohols mit Hexamethylendiisocyanat)
15 g Mattierungsmittel auf Siliciumdioxidbasis
34 g Ethylenglykolmono-n-butylether
40 g Diethylenglykolmonoethylether
806 g Polymerdispersion laut Beispiel 1, 2, 3, 4
2 g C$_{16}$-C$_{19}$-Oxoalkohol mit 35 Propylenoxid- und 5 Ethylenoxid-Einheiten
20 g Ca-Stearat-Dispersion 50 gew.%ig in Wasser
20 g Polyethylenwachsemulsion 35 gew.%ig (Tropfpunkt des Festkörpers 130°C)

wurden bei Raumtemperatur unter Rühren zu einem Holzlack gemischt.

In Tabelle 1 sind die Prüfergebnisse der mit diesem Holzlack beschichteten Holzoberflächen (Eiche hell) - der Holzlack wurde durch 2maliges Spritzen (Lackmenge: je ca. 80 g/m²) mit Zwischenschliff appliziert und bei Raumtemperatur getrocknet- zusammengestellt:

Tabelle 1

| Prüfergebnisse der beschichteten Holzoberfläche | | | |
|---|---|---|---|
| | 1 | 2 | 3 | 4 (Vergleich) |
| 1. Schleifbarkeit | gut | sehr gut | gut | gut |
| 2. Kratzfestigkeit | sehr gut | sehr gut | sehr gut | gut |
| 3. Cold check[2] Wechsel +50 und –20°C je 1 Std. | 100 | 100 | 100 | 100 |
| 4. Wasserdampfbeständigkeit[3] | sehr gut | sehr gut | gut | mangelhaft |
| 5. Widerstandsfähigkeit gegen chemische Einflüsse nach DIN 68 860 | gut bis sehr gut | gut bis sehr gut | gut | ausreichend |

(Einzelergebnisse siehe Tabelle 2)

2) Holzkörper (20×5,5×0,8 cm) werden 1× mit dem Holzlack beschichtet (µm naß, Aufzug mit Rahmen) und bei 70°C 20 min getrocknet, zwischengeschliffen (240 Körnung) und erneut wie oben beschrieben beschichtet. Das beschichtete Holz wurde 1 Woche bei 23°C und 50 % rel. Luftfeuchtigkeit gelagert und anschließend jeweils 1 Stunde bei +50°C im Trockenschrank und 1 Stunde bei -20°C in der Kühltruhe gelagert. Ein Wechsel umfaßte jeweils eine Lagerung bei +50°C und -20°C. Nach jedem Wechsel wurde die Beschichtung auf Beschädigungen (Rißbildung) hin untersucht. Der cold-check gibt die Anzahl der Wechsel an und ist ein Maß für die Elastizität der Beschichtung.

3) Beschichtung wurde 5 Minuten lang Wasserdampf von 100°C ausgesetzt. Geprüft wurden das Erweichen und das Weißanlaufen (sofort und nach 24 Stunden Rücktrocknung).

EP 0 279 067 B1

Tabelle 2

Widerstandsfähigkeit gegen chemische Einflüsse (Einzelergebnisse)

| Prüfmittel nach DIN 68 860 | | Einwirkdauer | Beispiel [a] | | | |
|---|---|---|---|---|---|---|
| | | | 1 | 2 | 3 | 4 (Vergleich) |
| 1 | Essigsäure | 60 min | 0 | 0 | 0 | 0 |
| 2 | Zitronensäure | 60 min | 0 | 0 | 0 | 0 |
| 3 | Natriumcarbonat | 2 min | 0 | 0 | 0 | 2 |
| 4 | Ammoniakwasser | 2 min | 0 | 0 | 0 | 2 |
| 5 | Ethylalkohol | 60 min | 0 | 0 | 2 | 4 |
| 6 | Weisswein, Rotwein, Südwein | 5 h | 0 | 0 | 1 | 2 |
| 7 | Bier | 5 h | 0 | 0 | 0 | 0 |
| 8 | Cola-Getränke | 16 h | 0 | 0 | 0 | 0 |
| 9 | Pulverkaffee | 16 h | 2 | 2 | 2 | 3 |
| 10 | Schwarzer Tee | 16 h | 0 | 0 | 1 | 2 |
| 11 | Schwarzer Johannisbeersaft | 16 h | 1 | 1 | 1 | 3 |
| 12 | Kondensmilch | 16 h | 0 | 0 | 2 | 4 |
| 13 | Wasser | 16 h | 0 | 0 | 0 | 1 |
| 14 | Benzin | 2 min | 0 | 0 | 0 | 0 |
| 15 | Aceton | 10 s | 0 | 0 | 3 | 4 |
| 16 | Athyl-Butylacetat | 10 s | 0 | 0 | 2 | 2 |
| 17 | Butter | 16 h | 1 | 1 | 0 | 1 |
| 18 | Olivenöl | 16 h | 1 | 0 | 0 | 1 |
| 19 | Senf | 5 h | 1 | 1 | 1 | 1 |
| 20 | Kochsalz | 5 h | 0 | 0 | 0 | 0 |
| 21 | Zwiebel | 5 h | 0 | 0 | 0 | 0 |
| 22 | Lippenstift | 16 h | 4 | 4 | 3 | 4 |
| 23 | Desinfektionsmittel | 10 min | 0 | 0 | 1 | 2 |
| 24 | Reinigungsmittel [b] | 60 min | 1 | 1 | 2 | 4 |
| 25 | Reinigungslösung [c] | 60 min | 0 | 0 | 0 | 0 |

a) Benotung nach DIN 53 230   0: nicht verändert
                                       5: sehr stark verändert

b) Gemisch aus 70 Gew.% Dodecylbenzolsulfonat-Na-Salz und 30 Gew.%
Alkylarylpolyglykolether

c) 33gew.%ige Lösung von b) in Wasser

## Patentansprüche

1. Wäßrige Polymerdispersionen, enthaltend im wesentlichen ein Copolymerisat aus
a) 85 bis 98,5 Gew.% Methacrylsäureester
b) 0,5 bis 4 Gew.% Acrylsäure und/oder Methacrylsäure
c) 0,5 bis 4 Gew.% Acrylsäureamid und/oder Methacrylsäureamid
d) 0,5 bis 4 Gew.% einer mindestens zweifach $\alpha,\beta$-ethylenisch ungesättigten Verbindung und
e) 0 bis 3 Gew.% einer carbonylgruppenhaltigen $\alpha,\beta$-ethylenisch ungesättigten Verbindung.

2. Wäßrige Polymerdispersionen nach Anspruch 1, enthaltend 0,5 bis 1 mol eines Dihydrazids einer aliphatischen Dicarbonsäure pro mol carbonylgruppenhaltiger $\alpha,\beta$-ethylenisch ungesättigter Verbindung e).

3. Wäßrige Polymerdispersionen nach den Ansprüchen 1 und 2, enthaltend übliche Zusatzstoffe wie Wachse, Filmbildehilfsmittel, Lösemittel, Mattierungsmittel und/oder Verdicker.

4. Verfahren zur Herstellung von wäßrigen Polymerdispersionen gemäß Anspruch 1, dadurch gekennzeichnet, daß man
a) 85 bis 98,5 Gew.% Methacrylsäureester
b) 0,5 bis 4 Gew.% Acrylsäure und/oder Methacrylsäure
c) 0,5 bis 4 Gew.% Acrylsäureamid und/oder Methacrylsäureamid

9

d) 0,5 bis 4 Gew.% einer mindestens zweifach α,β-ethylenisch ungesättigten Verbindung und

e) 0 bis 3 Gew.% einer carbonylgruppenhaltigen α,β-ethylenisch ungesättigten Verbindung.

in wäßriger Phase in Gegenwart von Emulgatoren und Initiatoren bei Temperaturen von 60 bis 95°C dispergiert und polymerisiert.

5. Verwendung der wäßrigen Polymerdispersionen gemäß den Ansprüchen 1 bis 3 als Bindemittel in wäßrigen Holzlacken.

6. Holzlacke, enthaltend wäßrige Polymerdispersionen gemäß den Ansprüchen 1 bis 3.

## Claims

1. An aqueous polymer dispersion essentially containing a copolymer of

a) from 85 to 98.5% by weight of methacrylates,

b) from 0.5 to 4% by weight of acrylic acid and/or methacrylic acid,

c) from 0.5 to 4% by weight of acrylamide and/or methacrylamide,

d) from 0.5 to 4% by weight of an α,β-ethylenically diunsaturated or polyunsaturated compound and

e) from 0 to 3% by weight of a carbonyl-containing α,β-ethylenically unsaturated compound.

2. An aqueous polymer dispersion as claimed in claim 1, containing from 0.5 to 1 mole of a dihydrazide of an aliphatic dicarboxylic acid per mole of carbonyl-containing α,β-ethylenically unsaturated compound e).

3. An aqueous polymer dispersion as claimed in claim 1 or 2, containing conventional additives, such as waxes, film formation assistants, solvents, flatting agents and/or thickeners.

4. A process for the preparation of an aqueous polymer dispersion as claimed in claim 1, wherein

a) from 85 to 98.5% by weight of methacrylates,

b) from 0.5 to 4% by weight of acrylic acid and/or methacrylic acid,

c) from 0.5 to 4% by weight of acrylamide and/or methacrylamide,

d) from 0.5 to 4% by weight of an α,β-ethylenically diunsaturated or polyunsaturated compound and

e) from 0 to 3% by weight of a carbonyl-containig α,β-ethylenically unsaturated compound

are dispersed and polymerized in the aqueous phase in the presence of emulsifiers and initiators at from 60 to 95°C.

5. Use of an aqueous polymer dispersion as claimed in claim 1 or 2 or 3 as binder in aqueous wood finishes.

6. A wood finish containing aqueous polymer dispersions as claimed in claim 1 or 2 or 3.

## Revendications

1. Dispersions aqueuses de polymères, contenant pour l'essentiel un copolymère de

a) 85 à 98,5% en poids d'un ester méthacrylique,

b) 0,5 à 4% en poids d'acide acrylique et/ou méthacrylique,

c) 0,5 à 4% en poids d'acrylamide et/ou de méthacrylamide,

d) 0,5 à 4% en poids d'un composé à au moins deux insaturations α,β-éthyléniques, et

e) 0 à 3% en poids d'un composé à insaturation α,β-éthylénique contenant des groupements carbonyle.

2. Dispersions aqueuses de polymères selon la revendication 1, contenant de 0,5 à 1 mole d'un dihydrazide d'un diacide carboxylique aliphatique par mole du composé à insaturation éthylénique contenant des groupements carbonyle e).

3. Dispersions aqueuses de polymères selon les revendications 1 ou 2, contenant des additifs usuels comme des cires, des adjuvants filmogènes, des solvants, des agents pour rendre mat et/ou des épaississants.

4. Procédé de préparation de dispersions aqueuses de polymères selon la revendication 1, caractérisé en ce qu'on disperse en phase aqueuse en présence d'émulsionnants et d'amorceurs à des températures de 60 à 85°C et on polymérise

a) 85 à 98,5% en poids d'un ester méthacrylique,

b) 0,5 à 4% en poids d'acide acrylique et/ou méthacrylique,

c) 0,5 à 4% en poids d'acrylamide et/ou de méthacrylamide,

d) 0,5 à 4% en poids d'un composé à au moins deux insaturations α,β-éthyléniques, et

e) 0 à 3% en poids d'un composé à insaturation α,β-éthylénique contenant des groupements carbonyle.

5. Utilisation des dispersions aqueuses de polymères selon les revendications 1 à 3 comme liants dans des laques aqueuses pour bois.

6. Laques pour bois, contenant des dispersions aqueuses de polymères selon les revendications 1 à 3.